# EUROPÄISCHE PATENTSCHRIFT

(11) **EP 3 044 608 B1**
(45) Veröffentlichungstag und Bekanntmachung des Hinweises auf die Patenterteilung: **11.11.2020**
(21) Anmeldenummer: 14755629.4
(22) Anmeldetag: 18.08.2014
(51) Int. Cl.: G01S 11/14, G01S 5/30

(54) **ORTUNGSVORRICHTUNG ZUM ORTEN VON SENDERN ODER MIT SENDERN VERBUNDENEN GEGENSTÄNDEN**
LOCATING DEVICE FOR LOCATING TRANSMITTERS OR OBJECTS CONNECTED TO TRANSMITTERS
DISPOSITIF DE LOCALISATION D'ÉMETTEURS OU D'OBJETS RELIÉS À DES ÉMETTEURS

(30) Priorität: 12.09.2013 DE 102013015050
(43) Veröffentlichungstag der Anmeldung: 20.07.2016
(73) Patentinhaber: Sarissa GmbH, 88250 Weingarten (DE)
(72) Erfinder: RODE, Reinhard, 74081 Heilbronn (DE); JAUCH, Volker, 88255 Baienfurt (DE)
(74) Vertreter: Otten, Roth, Dobler & Partner mbB Patentanwälte
(86) Internationale Anmeldenummer: PCT/EP2014/067532
(87) Internationale Veröffentlichungsnummer: WO 2015/036202

(56) Entgegenhaltungen:
- EP-A1- 1 426 784
- WO-A1-01/66201
- WO-A1-2009/126416
- WO-A1-2013/108243
- JP-A- H08 226 810
- US-A1- 2009 154 294

## Beschreibung

Die Erfindung betrifft eine Ortungsvorrichtung zur Ortung von Sendern oder von mit Sendern verbundenen Gegenständen nach dem Oberbegriff des Anspruchs 1.

In der WO 2013/108243 A1 ist eine Ortungsvorrichtung beschrieben, wobei zur Positionsbestimmung mittels Ultraschall mehrere Sender und mehrere Empfänger verwendet werden.

So sind diverse Ortungsvorrichtungen, insbesondere zur Ortung von Werkzeugen bei Montagevorgängen, die mit Ultraschallsende- und Ultraschallempfangseinheiten arbeiten, sind bereits im Handel erhältlich.

Bei derartigen Ortungsvorrichtungen werden Abstände zwischen Sender und Empfänger mit Hilfe einer Laufzeitmessung eines Ultraschallsignals bestimmt. Durch Verwendung mehrerer Ortungseinheiten, beispielsweise mehrerer Empfänger mit bekannter Position, lässt sich die Position eines Senders sehr genau orten.

Nachteilig an den bekannten Vorrichtungen ist der Umstand, dass stets nur eine Laufzeitmessung zu einem bestimmten Zeitpunkt stattfinden kann. Alle Laufzeitmessungen müssen nacheinander durchgeführt werden, weshalb die Anzahl der in akzeptabler Zeit ortbaren Sende- und/oder Empfangseinheiten begrenzt ist.

Werden beispielsweise bei einem oder mehreren ortsfesten Empfangsstationen verschiedene Sender geortet, so müssen Laufzeitmessungen entsprechend der Anzahl der zu ortenden Sender nacheinander durchgeführt werden. Da die Messungen einer Ortung dienen, ist der Zeitraum, der für die Ortung zur Verfügung steht, naturgemäß begrenzt, da die Ortung schneller zu vollziehen ist, als sich ein entsprechender Sender und/oder Empfänger erwartungsgemäß bewegt.

Dies ist insbesondere dann von Nachteil, wenn solche Ortungsvorrichtungen in benachbarten Arbeitsbereichen untergebracht sind, jedoch nicht synchron zu betreiben sind, da Laufzeitsignale aus benachbarten Arbeitsbereichen stören können.

Aufgabe der Erfindung ist es daher, eine Ortungsvorrichtung nach dem Oberbegriff des Anspruchs 1 vorzuschlagen, bei der wenigstens zwei synchrone Laufzeitmessungen mit anschließender Identifizierung der Herkunftssender möglich sind.

Diese Aufgabe wird ausgehend von einer Ortungsvorrichtung nach dem Oberbegriff des Anspruchs 1 durch dessen kennzeichnende Merkmale gelöst.

Bei der synchronen Laufzeitmessung von Messsignalen wenigstens zweier Sender besteht das Problem, auf Seiten eines Empfängers zu erkennen, welches Signal von welchem Sender stammt. Dieses Problem kann erfindungsgemäß dadurch gelöst werden, dass durch wiederholte Messung des gleichen Senders dieser aufgrund der im fraglichen Zeitraum der wiederholten Messungen in etwa gleichen Laufzeit identifizierbar ist, woraus sich zugleich ergibt, welches der andere oder die anderen Sender während der synchronen Laufzeitmessung waren.

Zwar wird zur Bestimmung der Identität der Herkunftssender eine oder mehrere zusätzliche Laufzeitmessungen erforderlich, durch die gleichzeitige synchrone Messung zweier oder mehrerer Sender bei wechselnden Kombinationen von Sendern in Verbindung mit einer Identifizierung der Herkunftssender der Signale aufgrund im Wesentlichen identischer Laufzeiten bei unterschiedlichen Messungen die Anzahl der in ihrem Abstand zum Empfänger bestimmbaren Sender durch eine bestimmte Anzahl synchroner Messungen deutlich zu erhöhen gegenüber der gleichen Anzahl von Einzelmessungen.

Darüber hinaus kann zur Realisierung der Erfindung der gegenständliche Aufbau bekannter Ortungsvorrichtungen verwendet werden, wobei erfindungsgemäß ausgebildete Steuer- und/oder Auswertungseinheiten zum Einsatz kommen.

Vorteilhafterweise wird eine Triggereinheit und/oder eine Uhr vorgesehen, um die synchronen Laufzeitmessungen zu starten. Somit kann durch eine vorgegebene Startzeit oder durch eine Triggereinheit eine vorgegebene Kombination von Sendern für eine synchrone Laufzeitmessung gestartet werden. Wird in einer weiteren Laufzeitmessung eine andere Kombination von Sendern gestartet, so kann durch Vergleich der Laufzeiten eine Identifikation von Sendern stattfinden.

Werden beispielsweise in einer Laufzeitmessung zwei Sender gestartet und in einer darauffolgenden zweiten Laufzeitmessung wiederum zwei Sender, wobei einer der Sender bei beiden Laufzeitmessungen beteiligt ist, so liegt auf der Hand, dass mit diesen zwei Laufzeitmessungen der Abstand dreier Sender zum Empfänger bestimmbar ist. Ein Vergleich der Laufzeiten ermöglicht es, den bei beiden Messungen beteiligten Sender zu identifizieren, womit die beiden anderen Sender ebenfalls identifiziert sind. Somit liegen drei identifizierte Sender und drei verschiedene Laufzeiten vor, sodass die Anzahl der Abstandsbestimmungen durch zwei synchrone Laufzeitmessungen um eine Abstandsbestimmung erhöht ist.

Dementsprechend wird vorteilhafterweise eine Auswerteeinheit vorgesehen, die zur Zuordnung wenigstens zweier Messsignale zu einem gemeinsamen Herkunftssender aufgrund gleicher Laufzeiten in mindestens zwei Laufzeitmessungen vorgesehen ist.

Durch die Vorgabe der Senderkombination ergibt sich gewissermaßen eine Kodierung zur Identifikation der Sender. Durch andere Kombinationen von Sendern in synchronen Laufzeitmessungen können auch anderweitige Kodierungen vorgesehen werden, um die mit einer bestimmten Anzahl von Laufzeitmessungen bestimmbaren Anzahl von Abständen zu erhöhen.

Wie bereits oben angedeutet, wird bevorzugt durch die Auswerteeinheit aus der vorgegebenen Kombination der in wenigstens zwei Laufzeitmessungen synchron gestarteten Sender und der Zuordnung wenigstens zweier Messsignale zu einem gemeinsamen Herkunftssender eine Identifikation des Herkunftssenders vorgesehen.

Besonders vorteilhaft ist die erfindungsgemäße Ortungsvorrichtung einsetzbar, wenn die synchron gestarteten Sender in räumlich getrennten Bereichen, beispielsweise in räumlich auseinander liegenden Arbeitsbereichen liegen.

Bei synchronen Laufzeitmessungen besteht bei nah beieinander liegenden Sendern die Gefahr, dass sich die Signale auf ihrem Weg zu einem Empfänger überlagern und im Empfänger nicht mehr getrennt beziehungsweise aufgelöst werden können. In einem solchen Fall der Signalüberlagerung ist keine exakte Laufzeit für beide oder mehrere Messsignale möglich. Eine solche Fehlfunktion kann dadurch verhindert werden, dass synchron gestartete Sender so weit voneinander beabstandet sind, dass eine Überlagerung der Laufzeitsignale nicht erfolgt.

Dies lässt sich beispielsweise dadurch erreichen, dass nur die Sender synchron aktiviert werden, deren zu erwartende Positionen während des Normalbetriebs der Ortungsvorrichtung weit genug voneinander beabstandet sind. Dies ist beispielsweise dann der Fall, wenn Sender Werkzeugen zugeordnet sind, die in verschiedenen Arbeitsbereichen untergebracht sind, die räumlich voneinander getrennt sind. In diesem Fall können zwar die Laufzeitsignale von Sendern in beiden Arbeitsbereichen in ein und demselben Empfänger empfangen werden, sie sind jedoch stets so weit zeitlich voneinander getrennt, dass sie getrennt erfasst und zeitlich verschiedenen Sendern zugeordnet werden können. Durch die erfindungsgemäß mögliche Identifikation bzw. Zuordnung von Messsignalen zu bestimmten Herkunftssendern ist somit auch die beabsichtigte Abstandsbestimmung möglich.

In einer vorteilhaften Ausführungsform der Erfindung werden mehrere Empfangseinheiten für mehrere Sender vorgesehen. Insbesondere in Verbindung mit verschiedenen Arbeitsbereichen oder mit von einander beabstandeten Sendern ist damit sichergestellt, dass jeder Sender im Empfangsbereich einer Empfangseinheit angeordnet werden kann.

Dabei können zwei oder mehrere Empfangseinheiten synchron arbeiten, d. h. sie können synchron gestartete Laufzeitsignale mehrerer Sender hinsichtlich der Laufzeit auswerten oder sie sind entsprechenden Auswerteeinheiten zugeordnet, die die empfangenen Signale synchron gestarteten Sendern zuordnen. In einer solchen Ausführung bedeutet die Verwendung mehrerer Empfangseinheiten funktional kein wesentlicher Unterschied zur Arbeit mit einer Empfangseinheit, wobei sichergestellt ist, dass auch von räumlich entfernten Sendern das Laufzeitsignal stets zumindest bei einer Empfangseinheit ankommt. Dabei ist es unerheblich, ob jede Empfangseinheit die Signale von allen synchron gestarteten Sendern oder nur einen Teil davon aufnimmt.

In einer vorteilhaften Ausführungsform umfasst wenigstens eine Empfangseinheit eine Triggereinheit. Auf diese Weise ist eine Laufzeitmessung besonders einfach möglich, indem die Empfangseinheit die synchron arbeitenden Sender gemeinsam triggert, d.h. den Start eines Laufzeitsignals auslöst. Die Empfangseinheit kann auf diese Weise unmittelbar die Laufzeit der eingehenden Messsignale bestimmen, sodass für eine dieser Empfangseinheit zugeordneten Auswerteeinheit nur noch die von einer solchen Empfangseinheit bestimmten Laufzeiten auszuwerten sind.

Im Falle mehrerer Empfangseinheiten werden zur Erzielung des gleichen Vorteils auch mehrere Empfangseinheiten mit Triggereinheiten versehen, wobei die Triggereinheiten synchronisiert sind. Auf diese Weise ist auch bei räumlich entfernten Sendern sichergestellt, dass das Triggersignal mittels einer im Arbeitsbereich der Sender befindlichen Empfangseinheit ohne größeren Aufwand an die entsprechenden Sender übermittelt werden kann. Eine solche Triggereinheit kann das Triggersignal beispielsweise verkabelt oder auch drahtlos an entsprechende Sender übermitteln.

Im Falle einer Verkabelung für das Triggersignal bedeutet die Zuordnung verschiedener Sender zu verschiedenen Empfangseinheiten eine erleichterte Verkabelung der Sendeeinheiten mit den Empfangseinheiten. Im Falle einer drahtlosen Triggerübermittlung können auch bei räumlich beabstandeten Sendern etwaige Störquellen, die räumlich begrenzt sind, vermieden werden. Bei drahtlosem Triggersignal muss dieses selbstverständlich eine wesentlich größere Ausbreitungsgeschwindigkeit aufweisen als das Messsignal für die Laufzeitmessung zur Bestimmung des Abstandes.

Dies ist beispielsweise bei Verwendung elektromagnetischer Strahlung für das Triggersignal und Verwendung von Ultraschallsignalen für die Laufzeitmessung der Fall.

In einer bevorzugten Ausführungsform umfasst wenigstens eine Empfangseinheit zugleich eine Auswerteeinheit, sodass an zentraler Stelle eine Identifizierung und Abstandsbestimmung bzw. Ortung aller zu erfassenden Sender vorgenommen werden kann. Denkbar wäre jedoch auch, jeder Empfangseinheit eine Auswerteeinheit zuzuordnen, die alle Sender innerhalb eines räumlichen Bereichs, beispielsweise eines Arbeitsbereichs, hinsichtlich Senderidentität und Abstand bzw. Ort erfasst, sodass mittels der diesem räumlichen Bereich zugeordneten Empfangseinheit alle darin befindlichen Sender bzw. mit den Sendern verbundene Gegenstände, wie beispielsweise Werkzeuge oder dergleichen, überwacht werden können.

Im Falle verschiedener Auswerteeinheiten ist es weiterhin sinnvoll, wenigstens eine Einheit zum Abgleich der von verschiedenen Auswerteeinheiten identifizierten Sender bzw. Gegenstände und/oder deren Position vorzusehen. Durch Abgleich der von unterschiedlichen Auswerteeinheiten ermittelten Ergebnisse können Fehler ermittelt und korrekt festgestellte Ergebnisse bestätigt werden.

Wie bereits erwähnt, ist die Verwendung von Ultraschallsignalen als Messsignal für die Laufzeitmessung bei einer erfindungsgemäßen Ortungsvorrichtung von Vorteil, da sich derartige Messverfahren für die Ortung innerhalb räumlich begrenzter Arbeitsbereiche bereits bewährt haben.

Ein Ausführungsbeispiel der Erfindung ist in der Zeichnung dargestellt und wird anhand der Figuren nachfolgend näher erläutert.

Im Einzelnen zeigen
- Figur 1: eine schematische Darstellung einer erfindungsgemäßen Vorrichtung mit drei Empfangseinheiten und zwölf Sendern und
- Figur 2: eine Tabelle, aus der die Zuordnung von 28 Sendern zu verschiedenen Senderkombinationen in 8 aufeinander folgenden synchronen Laufzeitmessungen veranschaulicht ist.

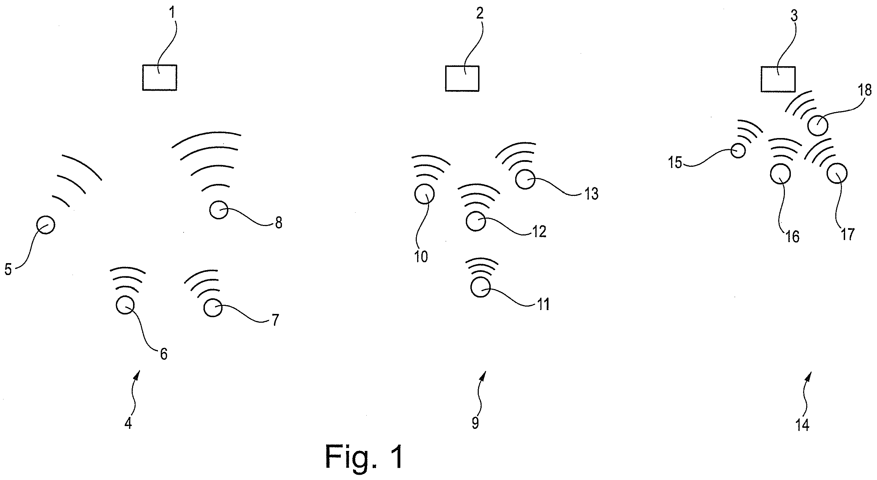

Die Ortungsvorrichtung gemäß Figur 1 umfasst drei Empfänger 1, 2, 3, die drei räumlich getrennte Arbeitsbereiche hinsichtlich des Abstands dort untergebrachter Sender überwachen.

Der Arbeitsbereich 4 beinhaltet die Sender 5, 6, 7, 8. Der Arbeitsbereich 9 umfasst die Sender 10, 11, 12, 13. Der Arbeitsbereich 14 wiederum umfasst die Sender 15, 16, 17, 18. Die Empfangseinheiten 1, 2, 3 sind auf nicht näher dargestellte Art und Weise miteinander synchronisiert und beinhalten jeweils eine eigene Triggereinheit, mittels denen synchronisiert vorgegebene Kombinationen der Sender 5 bis 8, 10 bis 13 sowie 15 bis 18 synchron getriggert werden können.

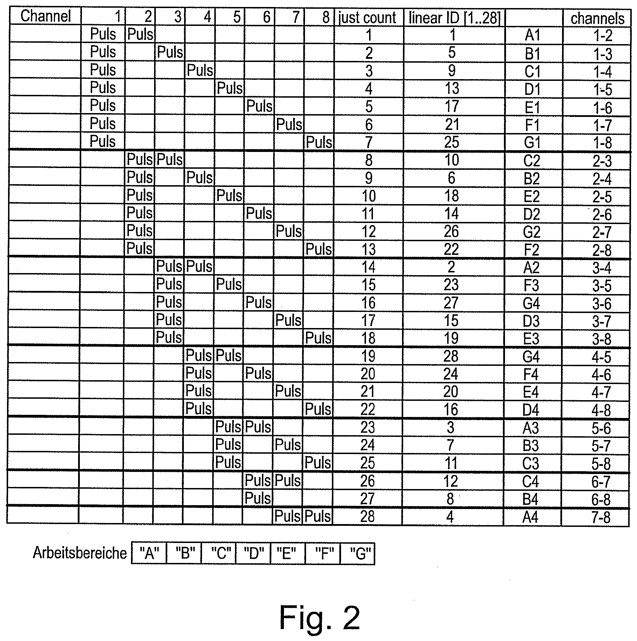

In Figur 2 sind insgesamt 28 Sender auf 7 Arbeitsbereiche aufgeteilt in einer Tabelle dargestellt, die mittels 8 Laufzeitmessungen hinsichtlich ihrer Laufzeit und damit des Abstandes zu einer Empfangseinheit auswertbar sowie identifizierbar sind.

Die Sender sind zeilenweise untereinander angeordnet und in der Spalte mit der Spalte mit der Überschrift "just count" laufend durchnummeriert.

Die Spalten 1 bis 8 stellen jeweils eine Laufzeitmessung dar, in der die mit in der jeweiligen Spalte durch den Begriff "Puls" markierten Sender arbeiten.

Die erfindungsgemäße Ortungsvorrichtung kann nunmehr wie folgt arbeiten. Bei der Laufzeitmessung Nummer 1 werden die in der laufenden Durchnummerierung mit 1 bis 7 nummerierten Sender synchron gestartet. Bei der Laufzeitmessung Nummer 2 wird der mit der laufenden Nummer 1 versehene Sender sowie die mit den laufenden Nummer 8 bis 13 versehenen Sender synchron gestartet. Bei der Laufzeitmessung Nummer 3 werden die Sender mit der laufenden Nummer 2, 8 sowie 14 bis 18 gestartet. Die weiteren Senderkombinationen für die Laufzeitmessungen 4 bis 8 ergeben sich in der gleichen Weise aus der jeweiligen Spalte zu der zugehörigen Laufzeitmessung.

Die Zuordnung von Laufzeiten zu identifizierten Sendern erfolgt nun wie folgt.

Durch die gleiche Laufzeit jedes Senders zu einem gleichen Empfänger kann eine zugehörige Auswerteeinheit zunächst ermitteln, welche Laufzeiten bzw. Messsignale zu einem gleichen Herkunftssender gehören. Durch die Triggerung der Sender in unterschiedlichen Kombinationen kann die Auswerteeinheit sodann durch Abgleich, in welchen der 8 Laufzeitmessungen die gleichen Laufzeitsignale ermittelt werden, den hierzu gehörigen Herkunftssender identifizieren. So ist beispielsweise der Sender mit der laufenden Nr. 1 dadurch identifizierbar, dass die gleiche Laufzeit sowohl in der Laufzeitmessung Nummer 1 als auch in der Laufzeitmessung Nummer 2 auftritt. Der Sender 1 ist der einzige Sender, der in diesen beiden Laufzeitmessungen gestartet wurde, d. h. er ist durch das Auftreten der jeweils gleichen Laufzeit in den Laufzeitmessungen Nummer 1 und Nummer 2 sowohl hinsichtlich seiner Laufzeit und damit des Abstandes zum für die Messung verwendeten Empfänger als auch hinsichtlich seiner Identität, d. h. des Senders mit der Nummer 1 identifizierbar.

Gleiches gilt in analoger Weise für den Sender Nummer 2, dessen Antwortsignale bei den Laufzeitmessungen 1 und 3 als gleiche Laufzeiten erfasst werden. Die in Figur 2 dargestellte Tabelle lässt somit unschwer erkennen, dass auf diese Weise durch 8 Laufzeitmessungen insgesamt 28 Sender identifizierbar sind, die zugleich über die jeweilige Laufzeit mit ihrem Abstand zum für die Messung verwendeten Empfänger bestimmbar sind.

Werden mehrere Empfänger verwendet, so ermittelt jeder Empfänger für den gleichen Sender eine unterschiedliche Laufzeit. Die oben beschriebene Auswertung kann somit für jeden Empfänger separat durchgeführt werden, wodurch ein Abgleich der Ergebnisse zwischen den verschiedenen Empfängern möglich ist, da die Position der Empfänger bekannt ist.

Bei Verwendung drei verschiedener Empfänger ist zudem nicht nur eine Abstandsmessung, sondern eine genaue Ortung jedes Senders möglich.

Bei Verwendung von Empfangseinheiten, die jeweils drei verschiedene Empfänger beinhalten, kann jede Empfangseinheit auf die dargestellte Weise eine Ortung durchführen. In diesem Fall kann das Ergebnis verschiedener Empfangseinheiten auch zu einem Plausibilitätsabgleich verwendet werden, um die separat ermittelten Ortungs- und Identifizierungsergebnisse auf Konsistenz zu überprüfen.

Die Zuordnung verschiedener Sender zu verschiedenen räumlich getrennten Bereichen, beispielsweise Arbeitsbereichen oder zu verschiedenen Identifikationsnummern oder auch in eine Aufteilung von verschiedenen Kanälen kann dabei beliebig vorgenommen werden. In der vorliegenden Ausführungsform sind gemäß der rechten Spalte mit der Überschrift "channels" beispielsweise alle Sender, die in der ersten Laufzeitmessung synchron arbeiten, Kanälen 1-2 bis 1-8 zugeordnet. Von den verbleibenden Sendern sind diejenigen, die in der Laufzeitmessung 2 synchron arbeiten, den Kanälen 2-3 bis 2-8 zugeordnet, usw.

Durch geeignete Zuordnung zu Arbeitsbereichen A, B, C bis G, wie dies beispielsweise in der zweitletzten Spalte von rechts gesehen dargestellt ist, kann sichergestellt werden, dass aus jedem Arbeitsbereich jeweils nur ein Sender bei jeder synchronen Laufzeitmessung 1 bis 8 gleichzeitig beteiligt ist. Durch eine solche Zuteilung der Sender in räumlich verschiedenen Arbeitsbereichen können Störungen durch Überlagerungen von Laufzeitsignalen vermieden werden.

Neben der beschriebenen und in den Figuren veranschaulichten Vorgehensweise zur Zuordnung verschiedener Sender durch verschiedene synchrone Laufzeitmessungen zu einer jeweiligen Identifikationsnummer können auch andere Vorgehensweisen, beispielsweise mit anderen Senderkombinationen, mit einer anderen Anzahl von Laufzeitmessungen oder dergleichen verwendet werden. Maßgeblich ist jeweils die Verwendung wenigstens zweier Sender, die in wenigstens zwei verschiedenen Laufzeitmessungen synchron mit jeweils wenigstens einem anderen Sender betrieben werden.

### Bezugszeichenliste:

- 1: Empfänger
- 2: Empfänger
- 3: Empfänger
- 4: Arbeitsbereich
- 5: Sender
- 6: Sender
- 7: Sender
- 8: Sender
- 9: Arbeitsbereich
- 10: Sender
- 11: Sender
- 12: Sender
- 13: Sender
- 14: Arbeitsbereich
- 15: Sender
- 16: Sender
- 17: Sender
- 18: Sender

## Patentansprüche

1. Ortungsvorrichtung zur Ortung von Sendern (5 bis 8, 10 bis 13, 15 bis 18) oder von mit Sendern (5 bis 8, 10 bis 13, 15 bis 18) verbundenen Gegenständen durch Bestimmung des Abstandes der Sender (5 bis 8, 10 bis 13, 15 bis 18) von wenigstens einem Empfänger (1 bis 3) mittels Laufzeitmessung eines Messsignals **dadurch gekennzeichnet, dass** eine Steuereinheit vorhanden ist, durch die eine synchrone Laufzeitmessung von Messsignalen wenigstens zweier synchron gestarteter Sender (5 bis 8, 10 bis 13, 15 bis 18) vorgesehen ist, wobei zur Abstandsbestimmung eines Senders (5 bis 8, 10 bis 13, 15 bis 18) zu einem Empfänger (1 bis 3) wenigstens zwei Laufzeitmessungen von Messsignalen dieses Senders (5 bis 8, 10 bis 13, 15 bis 18) vorgesehen sind, um diesen Sender (5 bis 8, 10 bis 13, 15 bis 18) als Herkunftssender (5 bis 8, 10 bis 13, 15 bis 18) seiner im Empfänger (1 bis 3) erfassten Messsignale zu identifizieren, und dass eine Auswerteeinheit zur Zuordnung wenigstens zweier Messsignale zu einem gemeinsamen Herkunftssender (5 bis 8, 10 bis 13, 15 bis 18) aufgrund gleicher Laufzeiten in mindestens zwei Laufzeitmessungen vorgesehen ist, wobei durch die Auswerteeinheit aus der vorgegebenen Kombination der in wenigstens zwei Laufzeitmessungen jeweils synchron gestarteten Sendern (5 bis 8, 10 bis 13, 15 bis 18) und der Zuordnung wenigstens zweier Messsignale zu einem gemeinsamen Herkunftssender (5 bis 8, 10 bis 13, 15 bis 18) eine Identifikation des Herkunftssenders (5 bis 8, 10 bis 13, 15 bis 18) vorgenommen wird.

2. Ortungsvorrichtung nach Anspruch 1, wobei eine Triggereinheit und/oder Uhr zum Starten synchroner Laufzeitmessungen mittels einer vorgegebenen Kombination von Sendern (5 bis 8, 10 bis 13, 15 bis 18) vorgesehen ist.

3. Ortungsvorrichtung nach einem der vorgenannten Ansprüche, wobei die Sender (5 bis 8, 10 bis 13, 15 bis 18) einer Kombination synchron gestarteter Sender (5 bis 8, 10 bis 13, 15 bis 18) räumlich auseinander liegenden Arbeitsbereichen zugeordnet sind.

4. Ortungsvorrichtung nach einem der vorgenannten Ansprüche, wobei mehrere Empfangseinheiten vorgesehen sind.

5. Ortungsvorrichtung nach einem der vorgenannten Ansprüche, wobei eine Empfangseinheit mehrere räumlich voneinander beabstandete Empfänger (1 bis 3) umfasst.

6. Ortungsvorrichtung nach einem der vorgenannten Ansprüche, wobei wenigstens eine Empfangseinheit eine Triggereinheit umfasst.

7. Ortungsvorrichtung nach einem der vorgenannten Ansprüche, wobei mehrere Empfangseinheiten synchron arbeitende Triggereinheiten umfassen.

8. Ortungsvorrichtung nach einem der vorgenannten Ansprüche, wobei eine Abgleicheinheit zum Abgleich der von verschiedenen Empfängern (1 bis 3) erfassten Sender (5 bis 8, 10 bis 13, 15 bis 18) und deren Abstand bzw. Position vorgesehen ist.

9. Ortungsvorrichtung nach einem der vorgenannten Ansprüche, wobei als Messsignal für die Laufzeitmessungen ein Ultraschallsignal vorgesehen ist.

10. Verfahren zur Ortung von Sendern (5 bis 8, 10 bis 13, 15 bis 18) oder von mit den Sendern (5 bis 8, 10 bis 13, 15 bis 18) verbundenen Gegenständen durch Bestimmung des Abstandes der Sender (5 bis 8, 10 bis 13, 15 bis 18) von wenigstens einem Empfänger (1 bis 3) mittels Laufzeitmessung eines Messsignales **dadurch gekennzeichnet, dass** eine synchrone Laufzeitmessung von Messsignalen wenigstens zweier synchron gestarteter Sender (5 bis 8, 10 bis 13, 15 bis 18) durchgeführt wird, wobei zur Abstandsbestimmung eines Senders (5 bis 8, 10 bis 13, 15 bis 18) wenigstens zwei Laufzeitmessungen von Messsignalen dieses Senders (5 bis 8, 10 bis 13, 15 bis 18) vorgenommen werden, mittels denen dieser Sender (5 bis 8, 10 bis 13, 15 bis 18) als Herkunftssender (5 bis 8, 10 bis 13, 15 bis 18) seiner im Empfänger (1 bis 3) erfassten Messsignale identifiziert wird, und dass eine Auswerteeinheit wenigstens zwei Messsignale zu einem gemeinsamen Herkunftssender (5 bis 8, 10 bis 13, 15 bis 18) aufgrund gleicher Laufzeiten in mindestens zwei Laufzeitmessungen zuordnet, wobei durch die Auswerteeinheit aus der vorgegebenen Kombination der in wenigstens zwei Laufzeitmessungen jeweils synchron gestarteten Sendern (5 bis 8, 10 bis 13, 15 bis 18) und der Zuordnung wenigstens zweier Messsignale zu einem gemeinsamen Herkunftssender (5 bis 8, 10 bis 13, 15 bis 18) die Identifikation des Herkunftssenders (5 bis 8, 10 bis 13, 15 bis 18) vorgenommen wird.

## Claims

1. A locating device for locating transmitters (5 to 8, 10 to 13, 15 to 18) or objects connected to transmitters (5 to 8, 10 to 13, 15 to 18) by determining the distance between the transmitters (5 to 8, 10 to 13, 15 to 18) of at least one receiver (1 to 3) by means of travel time measurement of a measurement signal, **characterised in that** a control unit is present, by means of which a synchronous travel time measurement of measurement signals of at least two synchronously started transmitters (5 to 8, 10 to 13, 15 to 18) is provided, wherein, to determine the distance of a transmitter (5 to 8, 10 to 13, 15 to 18) from a receiver (1 to 3), at least two travel time measurements of measurement signals from this transmitter (5 to 8, 10 to 13, 15 to 18) are provided in order to identify this transmitter (5 to 8, 10 to 13, 15 to 18) as the origin transmitter (5 to 8, 10 to 13, 15 to 18) of its measurement signals recorded in the receiver (1 to 3), and that an evaluation unit for assigning at least two measurement signals to a common source transmitter (5 to 8, 10 to 13, 15 to 18) is provided due to the same travel times in at least two travel time measurements, wherein the evaluation unit identifies the origin transmitter (5 to 8, 10 to 13, 15 to 18) from the predetermined combination of the synchronously started transmitters (5 to 8, 10 to 13, 15 to 18) in at least two travel time measurements and assigns at least two measurement signals to a common origin transmitter (5 to 8, 10 to 13, 15 to 18).

2. The locating device according to claim 1, wherein a trigger unit and/or clock is provided for starting synchronous travel time measurements by means of a predetermined combination of transmitters (5 to 8, 10 to 13, 15 to 18).

3. The locating device according to any one of the preceding claims, wherein the transmitters (5 to 8, 10 to 13, 15 to 18) of a combination of synchronously started transmitters (5 to 8, 10 to 13, 15 to 18) are assigned to spatially separated working areas.

4. The locating device according to any one of the preceding claims, wherein multiple receiving units are provided.

5. The locating device according to any one of the preceding claims, wherein a receiving unit comprises multiple spaced-apart receivers (1 to 3).

6. The locating device according to any one of the preceding claims, wherein at least one receiving unit comprises a trigger unit.

7. The locating device according to any one of the preceding claims, wherein multiple receiving units comprise synchronously operating trigger units.

8. The locating device according to any one of the preceding claims, wherein a comparison unit is provided for comparing the transmitters (5 to 8, 10 to 13, 15 to 18) detected by different receivers (1 to 3) and their distance or position.

9. The locating device according to any one of the preceding claims, wherein an ultrasonic signal is provided as the measurement signal for the travel time measurements.

10. A method for locating transmitters (5 to 8, 10 to 13, 15 to 18) or objects connected to the transmitters (5 to 8, 10 to 13, 15 to 18) by determining the distance between the transmitters (5 to 8, 10 to 13, 15 to 18) of at least one receiver (1 to 3) by means of travel time measurement of a measurement signal, **characterised in that** a synchronous travel time measurement of measurement signals of at least two synchronously started transmitters (5 to 8, 10 to 13, 15 to 18) is executed, wherein, to determine the distance of a transmitter (5 to 8, 10 to 13, 15 to 18), at least two travel time measurements of measurement signals from this transmitter (5 to 8, 10 to 13, 15 to 18) are executed by means of which this transmitter (5 to 8, 10 to 13, 15 to 18) is identified as the origin transmitter (5 to 8, 10 to 13, 15 to 18) of its measurement signals recorded in the receiver (1 to 3), and that an evaluation unit assigns at least two measurement signals to a common source transmitter (5 to 8, 10 to 13, 15 to 18) due to the same travel times in at least two travel time measurements, wherein the evaluation unit identifies the origin transmitter (5 to 8, 10 to 13, 15 to 18) from the predetermined combination of the synchronously started transmitters (5 to 8, 10 to 13, 15 to 18) in at least two travel time measurements and the assigns at least two measurement signals to a common origin transmitter (5 to 8, 10 to 13, 15 to 18).

## Revendications

1. Dispositif de localisation destiné à localiser des émetteurs (5 à 8, 10 à 13, 15 à 18) ou des objets connectés aux émetteurs (5 à 8, 10 à 13, 15 à 18) par calcul de la distance entre les émetteurs (5 à 8, 10 à 13, 15 à 18) et au moins un récepteur (1 à 3) au moyen de la mesure du temps de propagation d'un signal de mesure, **caractérisé en ce qu'**une unité de commande est présente, au moyen de laquelle une mesure du temps de propagation synchrone des signaux de mesure d'au moins deux émetteurs (5 à 8, 10 à 13, 15 à 18) démarrés de manière synchrone est effectuée, dans lequel, pour calculer la distance entre un émetteur (5 à 8, 10 à 13, 15 à 18) et un récepteur (1 à 3), au moins deux mesures de propagation des signaux de mesure dudit émetteur (5 à 8, 10 à 13, 15 à 18) sont effectuées pour identifier ledit émetteur (5 à 8, 10 à 13, 15 à 18) en tant qu'un émetteur d'origine (5 à 8, 10 à 13, 15 à 18) de ces signaux de mesure enregistrés dans le récepteur (1 à 3), et qu'une unité d'évaluation est prévue pour attribuer au moins deux signaux de mesure à un émetteur d'origine (5 à 8, 10 à 13, 15 à 18) commun, dans lequel, au moyen de l'unité d'évaluation, à partir d'une combinaison prédéterminée dans au moins deux mesures de temps de propagation des émetteurs (5 à 8, 10 à 13, 15 à 18) démarrés respectivement de manière synchrone et de l'attribution des au moins deux signaux de mesure à un émetteur d'origine (5 à 8, 10 à 13, 15 à 18) commun, une identification de l'émetteur d'origine (5 à 8, 10 à 13, 15 à 18) est effectuée.

2. Dispositif de localisation selon la revendication 1, dans lequel une unité de déclenchement et/ou une horloge est prévue pour démarrer des mesures de temps de propagation synchrones au moyen d'une combinaison prédéterminée d'émetteurs (5 à 8, 10 à 13, 15 à 18).

3. Dispositif de localisation selon l'une quelconque des revendications précédentes, dans lequel les émetteurs (5 à 8, 10 à 13, 15 à 18) d'une combinaison d'émetteurs (5 à 8, 10 à 13, 15 à 18) démarrés de manière synchrone sont attribués à des zones de fonctionnement dispersées dans l'espace.

4. Dispositif de localisation selon l'une quelconque des revendications précédentes, dans lequel plusieurs unités de réception sont prévues.

5. Dispositif de localisation selon l'une quelconque des revendications précédentes, dans lequel une unité de réception comprend plusieurs récepteurs (1 à 3) espacés dans l'espace.

6. Dispositif de localisation selon l'une quelconque des revendications précédentes, dans lequel au moins une unité de réception comprend une unité de déclenchement.

7. Dispositif de localisation selon l'une quelconque des revendications précédentes, dans lequel plusieurs unités de réception comprennent des unités de déclenchement fonctionnant de manière synchrone.

8. Dispositif de localisation selon l'une quelconque des revendications précédentes, dans lequel une unité d'égalisation est prévue pour égaliser les émetteurs (5 à 8, 10 à 13, 15 à 18) détectés à l'aide de différents récepteurs (1 à 3) ainsi que leur distance ou leur position.

9. Dispositif de localisation selon l'une quelconque des revendications précédentes, dans lequel un signal ultra sonore est fourni en tant que signal de mesure pour les mesures de temps de propagation.

10. Procédé de localisation des émetteurs (5 à 8, 10 à 13, 15 à 18) ou des objets connectés aux émetteurs (5 à 8, 10 à 13, 15 à 18) par calcul de la distance entre les émetteurs (5 à 8, 10 à 13, 15 à 18) et au moins un récepteur (1 à 3) au moyen de la mesure du temps de propagation d'un signal de mesure, **caractérisé en ce qu'**une mesure du temps de propagation synchrone des signaux de mesure d'au moins deux émetteurs (5 à 8, 10 à 13, 15 à 18) démarrés de manière synchrone est effectuée, dans lequel, pour calculer la distance d'un émetteur (5 à 8, 10 à 13, 15 à 18), au moins deux mesures de propagation des signaux de mesure dudit émetteur (5 à 8, 10 à 13, 15 à 18) sont effectuées, au moyen desquelles ledit émetteur (5 à 8, 10 à 13, 15 à 18) est identifié en tant qu'émetteur d'origine (5 à 8, 10 à 13, 15 à 18) de ces signaux de mesure enregistrés dans le récepteur (1 à 3), et qu'une unité d'évaluation attribue au moins deux signaux de mesure à un émetteur d'origine (5 à 8, 10 à 13, 15 à 18) commun en raison de temps de propagation égaux dans au moins deux mesures de temps de propagation, dans lequel l'émetteur d'origine (5 à 8, 10 à 13, 15 à 18) est identifié au moyen de l'unité d'évaluation, à partir d'une combinaison prédéterminée dans au moins deux mesures de temps de propagation des émetteurs (5 à 8, 10 à 13, 15 à 18) démarrés respectivement de manière synchrone et de l'attribution des au moins deux signaux de mesure à un émetteur d'origine (5 à 8, 10 à 13, 15 à 18) commun.
